# EUROPÄISCHE PATENTSCHRIFT

(11) **EP 0 490 120 B1**
(45) Veröffentlichungstag und Bekanntmachung des Hinweises auf die Patenterteilung: **07.02.1996**
(21) Anmeldenummer: 91119549.3
(22) Anmeldetag: 15.11.1991
(51) Int. Cl.: B62K 21/02

(54) **Fahrrad-Vorderradgabel aus einem Verbundwerkstoff**
Bicycle front fork of composite material
Bicyclette avec une fourche avant d'un matériel composite

(30) Priorität: 10.12.1990 DE 4039405; 18.09.1991 DE 4131082
(43) Veröffentlichungstag der Anmeldung: 17.06.1992
(60) Teilanmeldung: 95102619.4
(73) Patentinhaber: LOOK S.A., F-58004 Nevers Cédex (FR)
(72) Erfinder: Mercat, Jean-Pierre, F-37000 Tours (FR); Couturet, Jean-Pierre, F-58000 Nevers (FR)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 0 352 663
- FR-A- 321 390
- GB-A- 2 210 832
- US-A- 4 008 903
- US-A- 4 268 055

## Beschreibung

Die Erfindung betrifft eine Fahrrad-Vorderradgabel aus einem Verbundwerkstoff gemäß dem Oberbegriff des Anspruchs 1.

Verbundwerkstoffe finden aufgrund ihrer außergewöhnlichen Eigenschaften, insbesondere wegen ihres vorteilhaften Gewicht/Widerstand-Verhältnisses, im Fahrradbau und insbesondere für Fahrradrahmen zahlreiche Anwendungen und ermöglichen eine erhebliche Gewichtsverringerung sowie die Schaffung von aerodynamischen Formen für die einzelnen Rahmenstangen.

Die Vorderradgabel eignet sich jedoch schlecht zur Verwendung solcher Stoffe. Die herkömmlichen Gabeln aus Metall oder Leichtmetallegierungen enden nämlich an ihrem oberen Ende in einem zylindrischen Gabelkopf, der durch ein im Rahmen vorgesehenes Lenkrohr geführt und an den beiden Enden des Lenkrohrs mittels zweier Kugellager drehbar gelagert ist. Die Lenkstange ist am oberen Ende des Gabelkopfes mittels Einspannorganen befestigt. Da die Drehachse des Rades ferner aus Stabilitätsgründen vor der Lenkachse angeordnet sein muß, besitzen die Arme der Gabel eine gebogene Form, die nach vorne konkav ist.

Diese Struktur wurde aufgrund ihrer langerprobten Wirksamkeit und Einfachheit bei den ersten Versuchen, die Gabel aus Verbundwerkstoffen herzustellen, einfach beibehalten. Diese Versuche führten jedoch zu relativ schlechten Ergebnissen. Auf den am oberen Ende der Gabel vorgesehenen zylindrischen Gabelkopf werden nämlich beträchtliche Biegemomente ausgeübt, und zwar insbesondere in Höhe des unteren Lagers des zugehörigen Lenkkopfes bzw. Lenkrohrs. Im Falle eines Gabelkopfes aus Metall ist es einfach, Material und Wanddicke so zu wählen, daß diese Biegemomente ohne Verformung oder Bruchgefahr aufgenommen werden können. Handelt es sich jedoch um einen Gabelkopf aus einem Verbundwerkstoff, so ist es äußerst schwierig, ohne störende Erhöhung des Außendurchmessers des Gabelkopfes ein ausreichendes Trägheitsmoment zu erreichen.

Um einige dieser Nachteile zu beheben, wird in der US-A-40 08 903 eine aus Kunststoff gegossene Vorderradgabel mit zwei Gabelarmen vorgeschlagen, die miteinander verbunden sind, um einen oberen Gabelkopf zu bilden, welcher zwei nach hinten gerichtete Vorsprünge, nämlich einen oberen und einen unteren Vorsprung, aufweist. Diese Vorsprünge tragen beide Gelenkteile, welche mit ergänzenden Gelenkteilen am die Schwenkachse festlegenden Lenkkopf des Rahmens zusammenwirken. Dabei wird jedoch nicht erläutert, auf welche Weise die Festigkeit des Gabelkopfes sichergestellt wird. Außerdem zeigt der Gabelkopf eine Vielzahl von Unebenheiten, die die Aerodynamik des Fahrrades beeinträchtigen.

Schließlich ist festzustellen, daß bei der in der US-A-40 08 903 gezeigten Vorderradgabel die Arme nach vorne gebogen sind, damit die Achse eines an ihren Enden befestigten Rades in bezug auf die Längsachse um den Abstand nach vorne versetzt ist, der erforderlich ist, um die Stabilität des Fahrrades in bekannter Weise sicherzustellen.

Während die Herstellung der gekrümmten Gabelarme aus Metall einfach ist, gestaltet sich die Herstellung von solchen gekrümmten Gabelarmen bei der Verwendung von Verbundwerkstoffen wesentlich schwieriger, da bei diesen die Ausrichtung der Verstärkungsfasern sehr genau sein muß, was jedoch infolge der Ungenauigkeiten bei der manuellen Einbringung der Faserlagen nicht unter allen Umständen gewährleistet werden kann. Aus wirtschaftlichen Gründen ist es praktisch unmöglich, eine automatisierte, exakte Einbringung der Fasern bzw. Faserlagen vorzunehmen, und aus diesen Gründen werden deshalb die Fahrradgabeln üblicherweise auch weiterhin zumindest teilweise aus Metall hergestellt.

Aus der US-A 4,268,055 ist weiterhin eine Fahrrad-Vordergabel bekannt, deren Gabelarme im wesentlichen geradlinig ausgebildet sind und zur Stabilisierung des Fahrrades vor der Schwenkachse der Fahrrad-Vorderradgabel liegen. Diese Anordnung ist relativ komplex und nur mit hohem Aufwand an dem Rahmen zu befestigen.

Ferner ist es wünschenswert, die Verbindung zwischen Gabel und Lenkstange mit einer Verstellmöglichkeit in der Höhe, nach vorne und hinten zu realisieren, damit sowohl die Körpergröße des Radfahrers als auch die besonderen Fahrbedingungen insbesondere bei Radrennen berücksichtigt werden können. Zu diesem Zweck sind Vorrichtungen mit zwei teleskopischen Verbindungen bekannt, deren eine vertikal und deren andere horizontal verläuft und die leicht aus Metall, aber nicht aus Verbundwerkstoffen hergestellt werden können.

In bestimmten Fällen, insbesondere bei Radrennen, wird die Lenkstange bis unter die Höhe des oberen Lagers des Lenkrohrs abgesenkt, und zwar mit Hilfe von Bügeln, die am oberen Ende der Gabelkopf befestigt sind und sich nach unten erstrecken. Diese Vorrichtungen sind kompliziert und erfordern zahlreiche Vorarbeiten sowie den Austausch von Bauteilen vor jeder entsprechenden Ein- oder Umstellung.

Der Erfindung liegt die Aufgabe zugrunde, eine Vorderradgabel aus einem Verbundwerkstoff zu schaffen, die sehr widerstandsfähig ist, die insbesondere in Höhe ihrer unteren Anlenkstelle am Lenkkopf des Rahmens ein so großes Trägheitsmoment besitzt, daß die in dieser Höhe auftretenden starken Biegemomente aufgenommen werden können, die einfach und preiswert herzustellen und zu montieren ist, die zur Aerodynamik des Fahrrades beiträgt und die es gestattet, die Montage- und Einstellmöglichkeiten der Lenkstange zu vergrößern.

Diese Aufgabe wird bei einer Fahrrad-Vorderradgabel der eingangs genannten Art erfindungsgemäß dadurch gelöst, daß die Gabelarme im wesentlichen geradlinig ausgebildet und ihre Mittellinien zumindest im wesentlichen in einer Ebene gelegen sind, in der auch die Mittellinie des Gabelkopfes verläuft, wobei diese Ebene in einem von den Abmessungen des Fahrrades abhängigen Abstand vor der Schwenkachse angeordnet ist, der geeignet ist, die Stabilität des Fahrrades zu gewährleisten, und daß der obere nach hinten gerichtete Vorsprung des Gabelkopfes an einem vom Gabelkopf getrennten Aufsatz vorgesehen ist, der am oberen Ende des Gabelkopfes angebracht ist.

Durch die erfindungsgemäße Anordnung des Gabelkopfes vor der Lenkachse ist es nicht erforderlich, daß gekrümmte Arme verwendet werden, da die Drehachse des an den Enden der Arme fest angebrachten Rades bezüglich der Lenkachse nach vorne versetzt ist.

Es ergibt sich eine besonders einfache Herstellung und Montage der Gabel, auch wenn sie aus einem Verbundmaterial gebildet ist, das durch Fasern hoher Festigkeit (zum Beispiel Glasfasern, Aramidfasern, Kohlenstoffasern) verstärkt ist, deren Ausrichtungen an jedem Punkt der Gabel sehr genau eingehalten werden müssen.

Dadurch, daß der obere nach hinten gerichtete Vorsprung des Gabelkopfes an einem vom Gabelkopf getrennten Aufsatz ausgebildet ist, der am oberen Ende des Gabelkopfes angebracht werden kann, kann die erfindungsgemäße Vorderradgabel leicht an einem Rahmen befestigt werden. Der Vorsprung oder der von diesem Vorsprung getragene Gelenkteil kann dabei vorzugsweise demontierbar an dem Aufsatz oder dem Gabelkopf selbst befestigt sein.

Erfindungsgemäß kann eine Fahrrad-Vorderradgabel mit Organen zur Montage der Lenkstange am Ende des Gabelkopfes versehen sein, die Einstelleinrichtungen mit zwei Bewegungsarten besitzen, von denen mindestens eine und vorzugsweise beide eine Drehung sind.

Weitere vorteilhafte Ausgestaltungen der Erfindung sind in den Unteransprüchen beschrieben.

Weitere Einzelheiten und Vorteile der Erfindung ergeben sich aus der folgenden Beschreibung, in der auf die beiliegende Zeichnung Bezug genommen wird. Es zeigen:
- Figur 1: eine Seitenansicht einer erfindungsgemäßen Vorderradgabel,
- Figur 2: eine Vorderansicht der Gabel von Figur 1,
- Figur 3: einen horizontalen Schnitt durch die Gabel und den Rahmen nach der Linie III-III von Figur 1,
- Figur 4: einen vergrößerten vertikalen Schnitt durch ein Ausführungsbeispiel der Anlenkung der Gabel an dem Rahmen,
- Figur 5: einen entsprechenden vertikalen Schnitt durch eine Abwandlung der Anlenkung,
- Figur 6: eine perspektivische Teildarstellung einer zweckmäßigen Ausführungsform eines Gabelaufsatzes,
- Figur 7 a und Figur 7 b: eine Seitenansicht und eine Vorderansicht eines zusammen mit der erfindungsgemäßen Gabel verwendbaren verstellbaren Lenkstangenhalters in größerem Maßstab,
- Figur 8 a und Figur 8 b: entsprechende Ansichten einer Abwandlung des Lenkstangenhalters der Figuren 7 a und 7 b
- Figuren 9 bis 11: Skizzen von Abwandlungen des Lenkstangenhalters,
- Figur 12: einen Schnitt eines Teils einer bevorzugten Ausführungsform der Vorrichtung zur Montage der Lenkstange,
- Figur 13: einen Vertikalschnitt entsprechend Figuren 4 und 5 durch ein praktisches, bevorzugtes Ausführungsbeispiel des Gabelkopfes und seiner Anlenkung am Rahmen und
- Figur 14 a und Figur 14 b: eine Draufsicht und einen Schnitt eines Zwischenstücks, das zwischen den Gabelkopf und den Rahmen eingesetzt ist und als Drehanschlag dient.

Die in den Figuren gezeigte Vorderradgabel besteht aus einem Verbundwerkstoff, das heißt einem Werkstoff, der Fasern hoher Festigkeit wie Glasfasern, Aramidfasern, Kohlenstoffasern und dergleichen in einem Bindemittel aus Harz, wie Epoxyharz oder Polyamidharz, enthält.

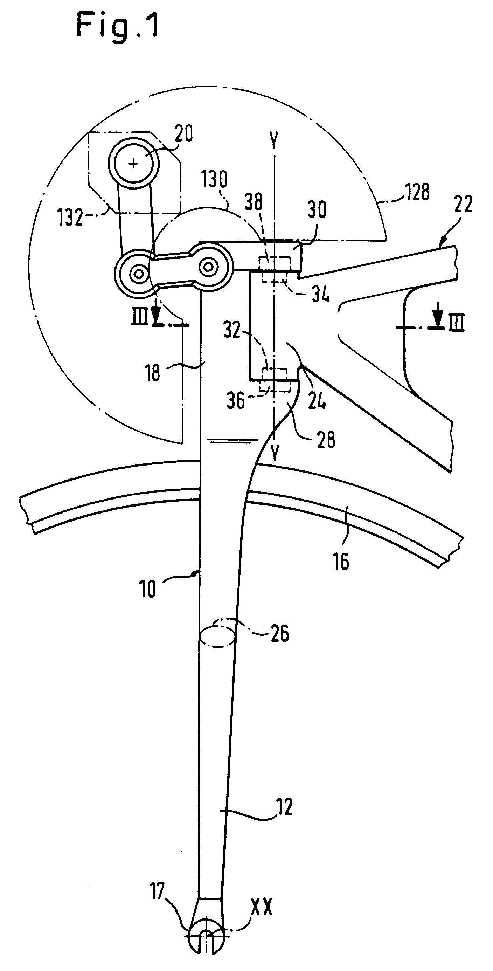

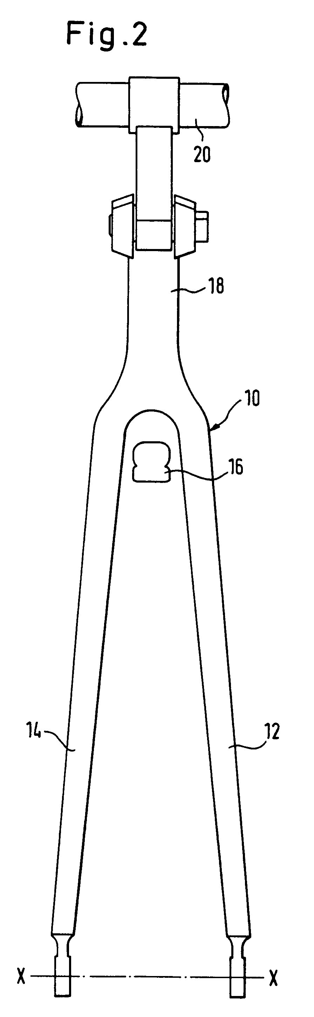

Wie die Figuren 1 und 2 zeigen, besteht die Gabel 10 aus zwei im wesentlichen geradlinigen, zueinander parallelen Armen 12 und 14, die einen für den Durchgang eines Rades 16 ausreichenden Abstand voneinander aufweisen. Es muß hier betont werden, daß die Figur 1 leicht im Uhrzeigersinn gedreht betrachtet werden muß, so daß die Gabel geneigt und die Radachse nach vorne, also nach links in der Figur versetzt ist. Die Enden der Arme bilden eine Gabel 17, die die Befestigung des nicht dargestellten Rades so gestattet, daß sich das Rad um eine Achse XX dreht. An ihrem oberen Ende vereinigen sich die beiden Arme 12, 14 zu einem Gabelkopf 18, der die Lenkstange 20 trägt und am Rahmen 22 des Fahrrads, und zwar an dem vorderen, überlicherweise "Lenkkopf" genannten Teil 24 des Rahmens drehbar gelagert ist, so daß ein Schwenken um die durch den Lenkkopf 24 definierte Schwenkachse YY möglich ist.

Auf diese Weise sind die die Mittellinien der beiden Arme 12, 14 der Vorderradgabel und die Mittellinie des Gabelkopfes 18 im wesentlichen in einer gemeinsamen Ebene angeordnet und die Drehachse XX des Rades ist in bezug auf die Schwenkachse YY um den nötigen Abstand nach vorne versetzt, um die Lenkstabilität des Fahrrads in bekannter Weise sicherzustellen, obwohl die Gabelarme 12, 14 geradlinig und nicht wie bekannten Fahrrädern gebogen sind. Die Vorteile der geradlinigen Gabelarme bestehen in einer Vereinfachung der Herstellung und einer verbesserten Festigkeit gegen Druck- und Biegekräfte.

Die Gabelarme besitzen einen ovalen Querschnitt 26, damit sie einen geringeren aerodynamischen Widerstand bieten.

Der Gabelkopf 18 befindet sich vor dem Lenkrohr 24. Er weist zwei nach hinten gerichtete Vorsprünge auf, und zwar einen unteren Vorsprung 28, der sich gerade über dem Bereich befindet, in dem sich die beiden Arme 12, 14 miteinander vereinigen, und einen oberen Vorsprung 30, der am oberen Ende des Gabelkopfes 18 vorgesehen ist. Der Abstand zwischen den beiden Vorsprüngen entspricht dabei im wesentlichen der Länge des Lenkkopfes bzw. Lenkrohrs 24. Der Lenkkopf ist zwischen den beiden Vorsprüngen montiert und trägt an seinen Enden Gelenkteile 32, 34, die mit ergänzenden, an den Vorsprüngen vorgesehenen Gelenkteilen 36, 38 zusammenwirken, wodurch die Lenkachse YY definiert wird. Ausführungsformen dieser Gelenkteile werden im nachstehenden ausführlicher beschrieben.

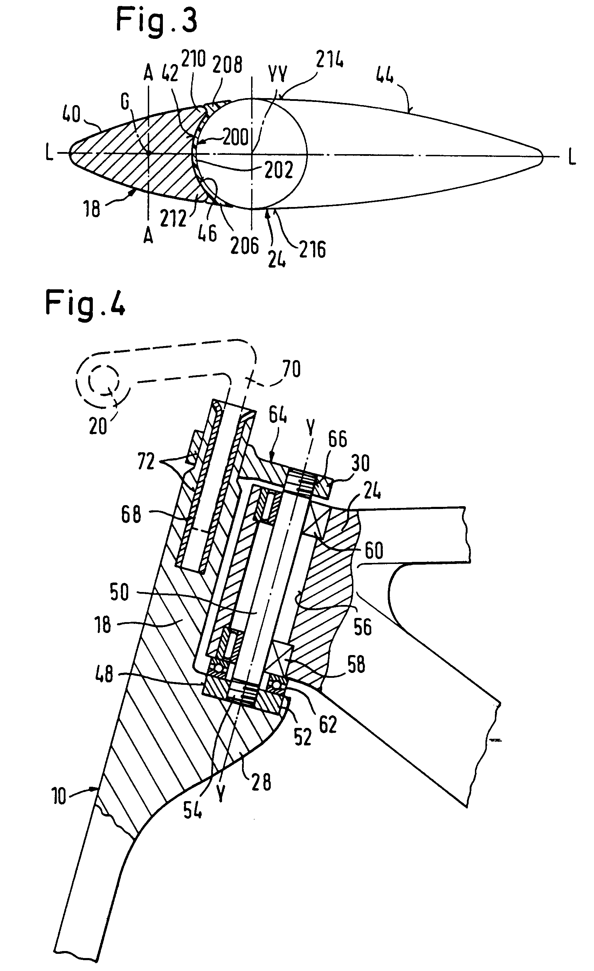

Der Querschnitt des Gabelkopfes entsprechend der Linie III-III von Figur 1 ist in Figur 3 mit einer voll ausgezogenen Linie gezeichnet, während der Querschnitt des Lenkkopfes mit zugehörigem Rahmenteil in dieser Figur schematisch mit einer dünnen Linie dargestellt ist.

Der Querschnitt des Gabelkopfes 18 hat einen aerodynamischen, etwa pfeilspitzenartigen Umriß, der aus einem etwa spitzkuppelförmigen Außenteil 40 und einer konkaven Basis 42 in Form eines Kreisbogens besteht, der auf die Lenkachse YY zentriert ist. Der Querschnitt des Lenkkopfes 24 hat ebenfalls eine aerodynamische Außenkontur 44, welche diejenige des Gabelkopfes 18 vervollständigt und vorne durch einen konvexen Teil 46 in Form eines Kreissegmentes abgeschlossen ist, das auf die Lenkachse YY zentriert ist, und zwar derart, daß zwischen den Gabelkopf 18 und dem Rohr 24 ein kleines Spiel verbleibt.

Die Umrisse des Gabelkopfs 18 und des Lenkkopfes 24 bilden zusammen eine Umrißkontur in Form eines Wassertropfens.

Die Breite des Gabelkopfs 18 ist im wesentlichen gleich derjenigen des Lenkrohrs 24. Die erforderliche Festigkeit wird durch die Dimensionierung der Länge und die Wahl der Umfangskontur des Querschnitts des Gabelkopfs 18 gewährleistet. Es kann auf diese Weise gewährleistet werden, daß das Trägheitsmoment zumindest bezüglich einer Achse AA, die senkrecht zur Längsachse LL des Rades verläuft und durch den Schwerpunkt G des Querschnitts geht, zumindest gleich einem vorgegebenen Wert ist, so daß der Gabelkopf 18 ohne Deformation den um die Linie AA auftretenden Biegemomenten standhalten kann. Das Trägheitsmoment bezüglich der Längsachse LL ist ebenfalls zumindest gleich einem vorbestimmten Wert, so daß der Gabelkopf 18 den Biegemomenten um diese Längsachse problemfrei widerstehen kann.

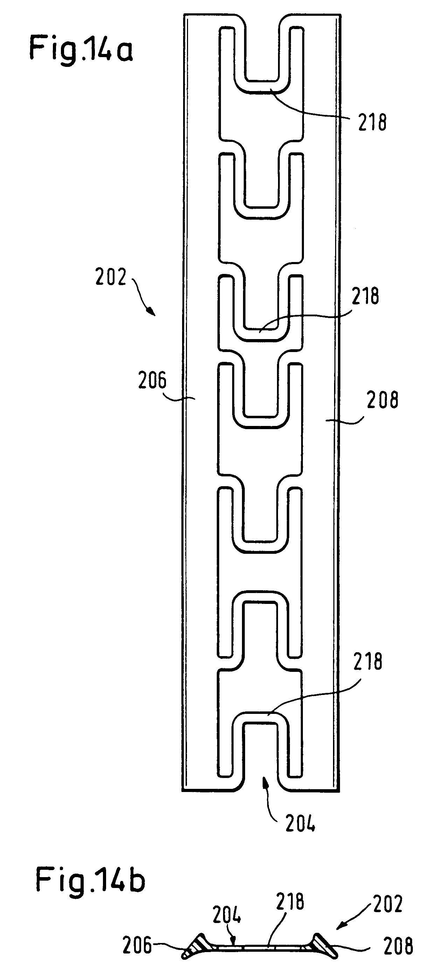

Wie in Figur 3 gezeigt, ist in einem Zwischenraum 200, der den Gabelkopf 18 und das Lenkrohr 24 trennt, vorteilhafterweise ein Zwischenstück in Form eines Bandes 202 aus elastomerem Material vorgesehen, das in Figuren 14 a und 14 b im einzelnen dargestellt ist. Das Band 202 umfaßt einen zentralen Streifen 204, dessen Dicke höchstens gleich der Weite des Zwischenraums 200 ist und dessen Breite wenig kleiner als die Länge des Zwischenraums in Horizontalrichtung ist. Das Band 202 besitzt an beiden Seiten Längswülste 206, 208, die sich, im eingebauten Zustand, vertikal im wesentlichen über die gesamte Länge des Lenkrohres erstrecken und deren Profil im Innenbereich entsprechend dem Gabelkopf 18 und dem Lenkrohr 24 und im Außenbereich so ausgebildet ist, daß die Einheit der Außenkontur zwischen Gabelkopf 18 und Lenkrohr 24 so vollkommen wie möglich sichergestellt ist.

Das Band 202 erfüllt also zwei wichtige Funktionen: zum einen verbessert es die Aerodynamik der Einheit Gabelkopf 18 - Lenkrohr 24, indem die Einheitlichkeit ihrer tropfenförmigen Außenkontur gewährleistet wird, zum anderen bildet es einen seitlichen Stoßdämpfer, wenn der Gabelkopf 18 in bezug auf das Lenkrohr 24 in eine Drehgrenzlage gelangt, in der die eine oder die andere der beiden nach hinten gerichteten Lippen 210, 212 des Gabelkopfprofils in Anlage mit der einen oder anderen Seite 214, 216 des Lenkrohrs gelangt. Im letzteren Fall wird der entsprechende Längswulst 206 bzw. 208 zwischen der Lippe 210 bzw. 212 des Gabelkopfes 18 und der entsprechenden Seite 214 bzw. 216 des Lenkrohres 24 zusammengedrückt, so daß ein direkter Kontakt zwischen den letzteren verhindert wird und eine Beschädigung des Verbundmaterials des Gabelkopfes 18 und / oder des Lenkrohres 24 vermieden wird.

Der zentrale Streifen 204 besteht vorteilhafterweise aus einer Reihe von Querstegen 218, die wenigstens annähernd U-förmig sind, um eine gewisse Längselastizität zu bieten. Es ist jedoch gleichfalls möglich, gerade Querstege oder einen über die gesamte Länge des Bandes 202 durchgehenden Streifen vorzusehen, der eine gewisse Elastizität aufweist. Bei der Montage wird also der zentrale Streifen 204 nur wenig beansprucht und die Längswülste 206, 208 sind ständig zwischen dem Gabelkopf 18 und dem Lenkrohr 24 in Anlage.

Figur 4 zeigt eine erste Ausführungsform des Gelenks zwischen dem Gabelkopf 18 und dem Lenkkopf 24. Der untere Vorsprung 28 ist mit der Gabel 10 aus einem Stück geformt und besitzt eine Bohrung 48 zur Aufnahme einer Achse 50. Der Vorsprung 28 besitzt vorzugsweise einen ringförmigen Einsatz 52 mit Innengewinde, und die Achse endet in einem mit Gewinde versehenen Teil 54, der in den Einsatz 52 eingeschraubt ist. Das Lenkrohr 24 besitzt einen zylindrischen Durchgang 56, der von der Achse 50 durchsetzt ist und an dessen beiden Enden zwei Wälzlager 58 und 60, vorzugsweise Nadellager, montiert sind, die die Achse 50 aufnehmen. Ein Druckkugellager 62 ist zwischen die Unterseite des Lenkkopfes 24 und die Oberseite des Vorsprungs 28 eingesetzt und nimmt die in der Lenkachse YY wirkenden Kräfte auf.

Der obere Vorsprung 30 ist an einem Aufsatz 64 vorgesehen, der am oberen Ende des Gabelkopfes 18 form- und kraftschlüssig auf beliebige Weise, beispielsweise durch Verklebung, befestigt ist. Er besitzt eine zur Lenkachse YY koaxiale Bohrung 66, die das obere Ende der Achse 50 vorzugsweise ohne Spiel aufnimmt. Die Achse besitzt an ihrem oberen Ende beispielsweise einen Innensechskant, so daß sie mit Hilfe eines Innensechskantschlüssels aus dem Einsatz ausgeschraubt und anschließend zum Ausbau der Gabel herausgezogen werden kann.

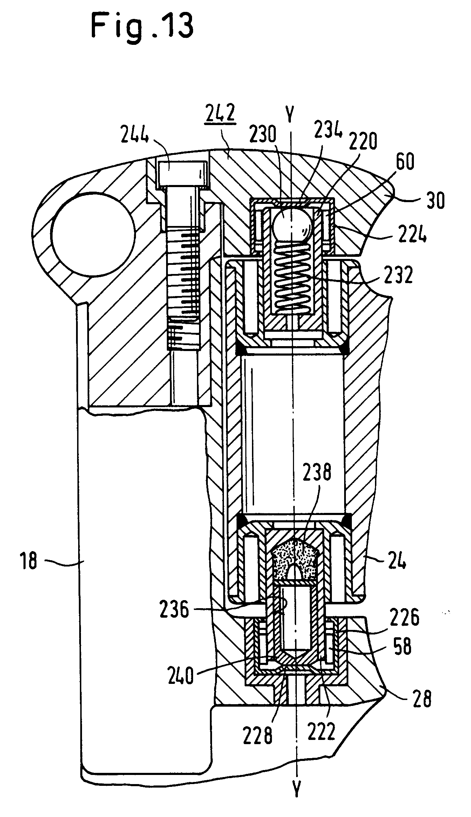

Daß die Wälzkörper, die zwischen die Gelenkzapfen und die Einsätze eingesetzt sind, Wälznadeln sind, hat den Vorteil, daß diese Wälzkörper gegen Radialkräfte sehr widerstandsfähig sind, ohne langfristig eine Einkerbung oder Beschädigung der Wälzflächen zu bewirken, da die Nadeln und die zugeordneten Wälzflächen in linienförmigen Kontakt miteinander stehen. Zur Aufnahme von entlang der Achse YY wirkenden Axialkräften kann auf ein einen Anschlag bildendes Wälzlager verzichtet und ein Metall/Metall-Kontakt auf einer sehr kleinen Fläche um die Schwenkachse YY herum vorgesehen werden, wie in Figur 13 gezeigt. In dieser Figur trägt das Lenkrohr 24 die beiden Gelenkzapfen, das heißt einen oberen Gelenkzapfen 220 und einen unteren Gelenkzapfen 222, und der obere Vorsprung 30 sowie der untere Vorsprung 28 des Gabelkopfes 18 weisen Büchsen 224 bzw. 226 auf, die die Außenkäfige von Nadellagern bilden, während die beiden Gelenkzapfen selbst als Innenkäfige dieser Nadellager dienen.

Der untere Gelenkzapfen 222 gelangt auf einer sehr verringerten Kontaktfläche in Eingriff mit einem Buckel 228 am Boden der Büchse 226 des unteren Vorsprungs 28. Die Axialkräfte zwischen der Gabel und dem Rahmen, die zwischen dem unteren Gelenkzapfen 220 und dem Buckel 228 übertragen werden, werden also in ein sehr kleines Reibmoment umgesetzt, das nicht stört, vor allem wenn man berücksichtigt, daß die Drehgeschwindigkeiten zwischen der Gabel und dem Rahmen vernachlässigbar sind.

In derselben Figur erkennt man, daß das axiale Montagespiel dadurch ausgeglichen wird, daß der obere Gelenkzapfen 220 eine Kugel 230 trägt, die von einer Feder 232 nach oben gegen den Boden 234 der oberen Büchse 224 gedrückt wird. Weiter umfaßt der untere Schwenkzapfen eine Stoßdämpfervorrichtung, die in folgender Weise gebildet ist: Der Schwenkzapfen 222 ist an seinem unteren Ende mit einer axialen Sackbohrung 236 versehen. Ein Block 238 aus Dämpfungsmaterial ist im hinteren Innenbereich der Bohrung 236 aufgenommen und ein Kolben 240 ist gleitend in dem unteren Teil der Sackbohrung 236 aufgenommen und ragt aus dieser hervor, um in Eingriff mit dem Buckel 228 zu gelangen. Dies gestattet in vorteilhafter Weise, Stöße und Vibrationen zwischen der Gabel und dem Rahmen abzufangen.

Nach Figur 13 ist die Demontierbarkeit der Gabel dadurch sichergestellt, daß der obere Vorsprung 30 des Gabelkopfes 18 an einem abnehmbaren Teil 242 vorgesehen ist, das auf dem Gabelkopf 18 mit einer Schraube 244 befestigt ist. Es ist also ausreichend, diese Schraube 244 herauszuschrauben, um das abnehmbare Teil 242 von der Gabel zu trennen. Zum Beispiel ist dies insbesondere für den Transport des Fahrrades von Vorteil.

Wie die Figur 4 zeigt, besitzen der Gabelkopf 18 und der Aufsatz 64 fluchtende Bohrungen 72, in die eine Buchse 68 eingepreßt ist, die zur Aufnahme einer Lenkstange 70 dient. Die Bohrung 72 erstreckt sich in der Stange über eine relativ kurze Strecke und endet weit oberhalb des unteren Vorsprungs 28. Die dieser Bohrung entsprechende Wegnahme von Material hat nämlich zur Folge, daß die Trägheitsmomente des Querschnitts verringert werden, was in Höhe des unteren Vorsprungs nicht wünschenswert ist. Dagegen ist diese Reduzierung im oberen Teil des Gabelkopfes, in dem die auftretenden Biegemomente weniger stark sind, ohne störende Auswirkung.

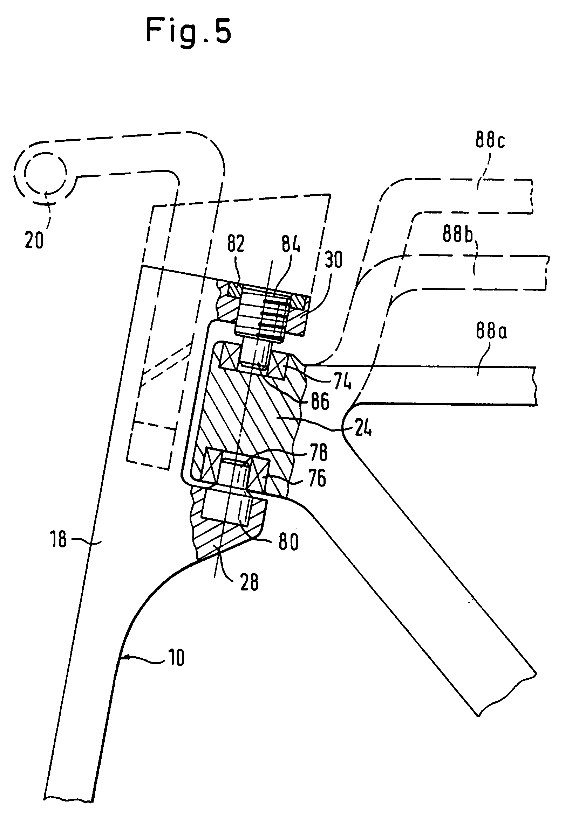

Bei der in Figur 5 gezeigten Ausführungsform trägt der Lenkkopf am oberen und am unteren Ende jeweils ein Wälzlager 74 bzw. 76. Der untere Vorsprung 28 trägt ein kurzes zylindrisches Element 78, das beispielsweise von einer Verlängerung eines in dem Vorsprung befestigten Einsatzes 80 gebildet ist und in das untere Wälzlager 76 eintritt. Der obere Vorsprung 30 ist mit dem Gabelkopf 18 aus einem Stück geformt und besitzt einen Einsatz 82 mit einem Innengewinde, in das ein Block 84 eingeschraubt ist, der ebenfalls durch ein kurzes zylindrisches Element 86 verlängert ist, das in das obere Wälzlager 74 eintritt. In diesem Fall kann der Lenkkopf 24 des Rahmens massiv ausgeführt sein.

Diese Lösung ist besonders einfach und robust. Dagegen erfordert die einstückige Ausbildung des oberen Vorsprungs 30 und des Gabelkopfes 18 entweder mehrere Formen für die Gabelherstellung, bei denen die Vorsprünge zur Berücksichtigung der verschiedenen Rahmenhöhen und damit Rohrhöhen in verschiedenen Abständen angeordnet sind, oder eine Ausrüstung aller Rahmen unabhängig von ihrer Höhe mit Lenkrohren gleicher Abmessung. Die zweite Lösung ist in Figur 5 mit unterbrochenen Linien gezeichnet, wobei die oberen Rahmenstangen 88 a, 88b, 88c an ein und dasselbe Lenkrohrmodell über mehr oder weniger weit hochgezogene Teile anschließen.

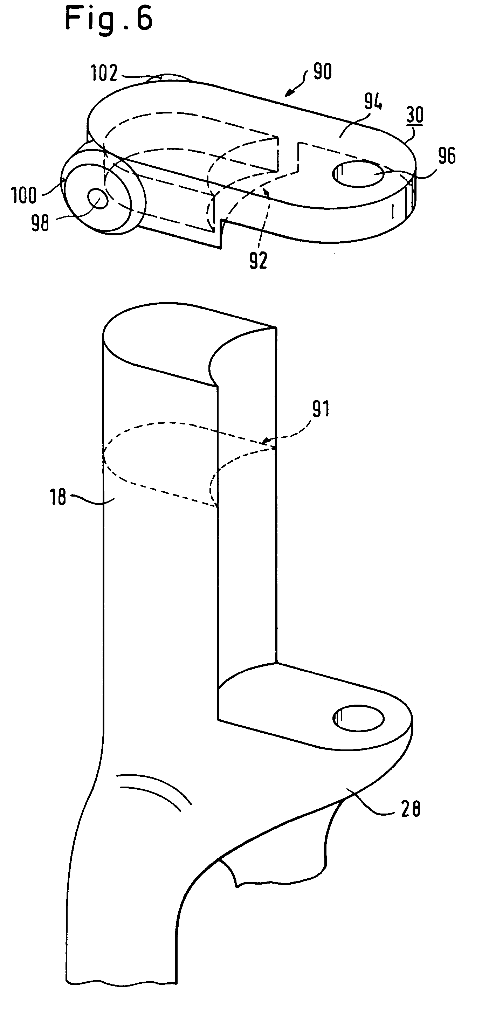

Die perspektivische Teilansicht von Figur 6 zeigt eine Variante eines Aufsatzes 90, an dem gleichzeitig der obere Vorsprung 30 und eine Lenkstangenhalterung ausgebildet sind, ohne daß im Gabelkopf 18 eine Bohrung vorgesehen werden muß. Dieser Aufsatz gestattet außerdem eine standardisierte Herstellung der Gabel, das heißt mit einem Gabelkopf von einer Länge, die dem längsten Lenkkopf eines Rahmens mit der größten Höhe entspricht, wobei der Gabelkopf dann auf diejenige Länge zugeschnitten wird, die dem Lenkkopf des Rahmens entspricht, an dem die Gabel montiert werden soll. Dies ist strichliert bei 91 in Figur 6 gezeigt.

Der Aufsatz 90 besitzt die allgemeine Form einer Platte, die an ihrer Unterseite eine Aussparung 92 mit einer dem Umriß des Gabelkopfs entsprechenden Form aufweist. Wenn der Gabelkopf 18 auf die gewünschte Länge zugeschnitten ist, wird der Aufsatz einfach auf das Ende des Gabelkopfes aufgesteckt und mit diesem verklebt. Der Aufsatz besitzt eine sich nach hinten erstreckende Verlängerung 94, die den oberen Vorsprung 30 bildet und von einer Bohrung 96 durchsetzt ist, die entweder wie in Figur 4 zur Aufnahme des Endes einer feststehenden Achse oder wie in Figur 5 zur Aufnahme eines eingeschraubten Blocks mit einem Achszapfen ausgebildet ist.

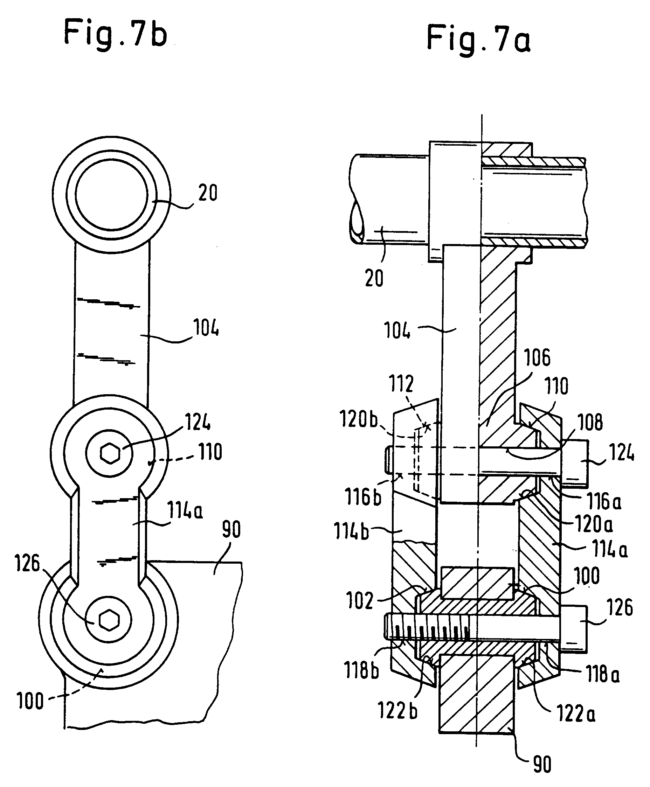

An seinem vorderen Ende ist der Aufsatz 90 von einer horizontalen Querbohrung 98 durchsetzt und besitzt an beiden Enden dieser Bohrung vortretende kegelstumpfförmige Klemmflächen 100 und 102, die die Montage der Lenkstange auf die anhand der Figuren 7 bis 11 beschriebene Weise gestatten.

Die Lenkstange 20 kann jedem bekannten Typ entsprechen und wird deshalb in den Figuren nicht vollständig dargestellt.

Nach den Figuren 7 a und 7 b ist ein kurzes Rohr 104 in der Mitte des Mittelabschnitts der Lenkstange 20 mit Hilfe eines bekannten Einspannorgans befestigt und verläuft senkrecht zu diesem Mittelabschnitt.

Am Ende des Rohrs 104 ist ein Block 106 vorgesehen, der von einer horizontalen Querbohrung 108 durchsetzt ist. An den beiden Enden dieser Bohrung sind zwei vortretende kegelstumpfförmige Klemmflächen 110 und 112 ausgebildet. Zwei längliche Platten 114 a, 114 b mit Löchern 116 a, 118 a, 116 b, 118 b und hohlkegelstumpfförmigen Klemmflächen 120 a, 122 a, 120 b, 122 b in Nähe ihrer Enden sind zu beiden Seiten des Aufsatzes 90 der Gabel und des Blocks 106 angeordnet. In den Bohrungen des Aufsatzes und des Blocks sitzen Bolzen 124, 126, die angezogen werden, so daß die Klemmflächen der länglichen Platten einerseits an die Klemmflächen 100, 102 des Aufsatzes und andererseits an die Klemmflächen 110, 112 des Blocks fest angedrückt werden. Auf diese Weise ist eine Verstellung der Lenkstange 20 sowohl in der Höhe als auch nach vorne und hinten um zwei Drehachsen möglich, die von den Achsen der kegelstumpfförmigen Klemmflächen gebildet werden. Zum Zweck dieser Verstellung werden die Bolzen 124, 126 gelockert und anschließend wieder angezogen.

Der Einstellbereich hängt von der Länge des Rohrs 104 und der Platten 114 a, 114 b ab. Beispielsweise läßt sich der in den Figuren 1 und 2 durch die Kreisbögen 128, 130 abgegrenzte Bereich erreichen, der erheblich größer als der bei herkömmlichen Vorrichtungen bestehende Einstellbereich 132 ist. Insbesondere stellt man fest, daß die Lenkstange so weit abgesenkt werden kann, daß sie sich weit unter dem oberen Ende der Gabel befindet, ohne daß hierzu Bauteile abzubauen oder auszutauschen sind.

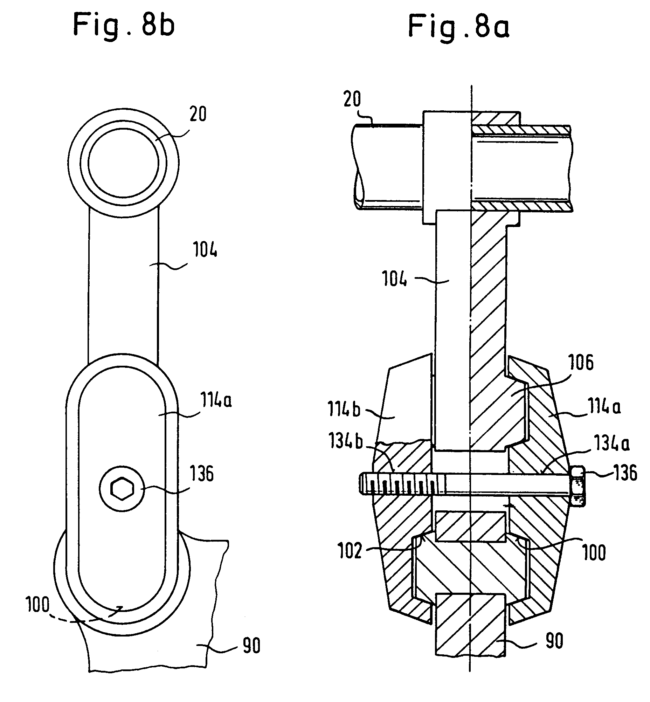

Bei der in den Figuren 8 a und 8 b gezeigten Abwandlung besitzen der Aufsatz 90 und der Block 106 keine Querbohrung. Die länglichen Platten 114 a, 114 b weisen jeweils eine Mittenbohrung 134 a, 134 b auf, und ein einziger Spannbolzen 136, der diese Bohrungen durchsetzt, dient zur Festspannung an den beiden Einstellachsen.

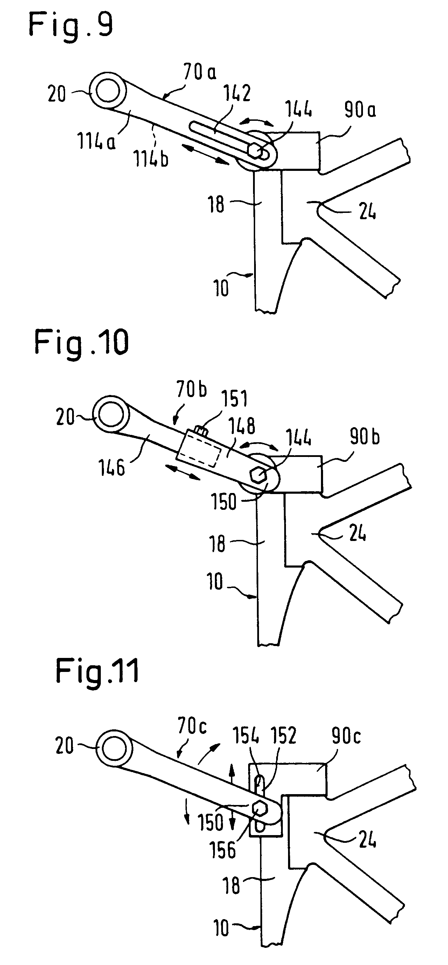

Weitere Möglichkeiten sind in den skizzenartig ausgeführten Figuren 9 bis 11 dargestellt:
- Verstellung durch Drehung um eine am Gabelaufsatz definierte Achse und durch Verschiebung längs der zwei Klemmplatten nach Figur 9; in diesem Falle besitzt der Aufsatz zwei Klemmflächen und eine zugeordnete Drehachse analog der anhand der Figuren 7 a und 7 b erläuterten Ausführungsform. Das Trägerorgan 70 a zur Befestigung der Lenkstange 20 besteht aus zwei zueinander parallelen Platten 114 a, 114 b, die beide mit Langlöchern 142 versehen sind, deren seitliche Begrenzungsflächen gleichzeitig Blockierflächen bilden. Durch die Bohrung im Aufsatz 90 a erstreckt sich ein Klemmorgan 144, beispielsweise eine Klemmschraube, dieses Klemmorgan durchdringt auch die Langlöcher 142 der Platten und gestattet es, die Platten 114 a, 114 b sowohl hinsichtlich Rotation und Längsbewegung zu fixieren;
- Verstellung durch Rotation um eine am Gabelaufsatz vorgesehene Achse und durch Translation bzw. Verschiebung einer teleskopischen Anordnung, welche die Lenkstange trägt. Dies ist in Figur 10 gezeigt. In diesem Falle ist der Aufsatz 90 b im wesentlichen identisch zu dem Aufsatz nach Figur 9 ausgebildet. Das Trägerteil 70 b, das zur Befestigung der Lenkstange dient, besteht jedoch aus zwei teleskopisch miteinander verbundenen Teilen 146, 148. Das eine Teil 146 besitzt am Ende eine Klemmaufnahme für die Lenkstange 20, und das andere Teil ist am Ende gabelförmig ausgebildet und besitzt Ansätze 150, die mit Öffnungen versehen sind und deren Innenflächen gleichermaßen Klemmflächen bilden. Eine zur vorhergehenden Schraube beispielsweise identisch ausgebildete Klemmschraube 144 durchsetzt die Ansätze 150 sowie die Bohrung im Aufsatz 90 b. Diese Klemmschraube allein ermöglicht eine Blockierung gegen Rotation, während die gegenseitige Blockierung der zwei teleskopischen Teile 146, 148 durch eine eigene Blockierschraube 151 gewährleistet wird;
- Verstellung durch Rotation um eine Achse, die selbst an der Gabel verschiebbar gehalten ist, wie dies Figur 11 zeigt. In diesem Falle besitzt der Lenkstangenträger 70 c eine feste Länge und ist am Ende gabelförmig ausgebildet, wobei die beiden Gabelwangen 150 mit Öffnungen analog der Ausführungsform nach Figur 10 versehen sind. Der Aufsatz 90 c besitzt jedoch ein im wesentlichen verlaufendes Langloch 152, dessen Begrenzungsränder 154 Blockierflächen bilden. Eine Klemmschraube 156 ist durch die beiden Ansätze des Trägerelements 70 c sowie durch das Langloch 152 des Aufsatzes 90 c geführt. Diese Klemmschraube ermöglicht gleichzeitig eine Blockierung bezüglich Rotation und Translation.

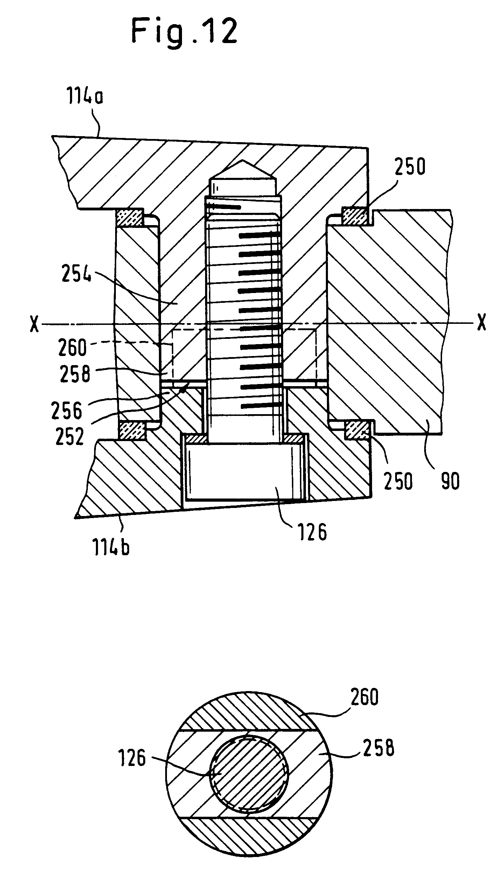

Bei der besonders bevorzugten, in Figur 12 dargestellten Ausführungsform sind die Klemmflächen eben und Ringe 250 aus Keramikmaterial sind zwischen den Aufsatz 90 der Gabel und die länglichen Platten 114 a, 114 b, also zwischen die letzteren und den Block 106 der Lenkstange eingesetzt. Diese Ausführungsform ist zugleich besonders wirtschaftlich, da es genügt, ebene Klemmflächen herzustellen und da die Keramikringe wenig teuer sind, und besonders wirksam, da das Keramikmaterial einen hervorragenden Reibungskoeffizienten gegenüber dem Material, aus dem der Aufsatz der Gabel, die länglichen Platten und der Block der Lenkstange besteht, aufweist.

In Figur 12 ist weiter zu erkennen, daß die beiden länglichen Platten über eine formschlüssige Verbindung 252 miteinander zusammenwirken. Hierzu umfassen die beiden Platten Vorsprünge 254, 256, die, wie beispielsweise dargestellt, um die Drehachse herum angeordnet sind, wobei der eine in Form eines Einsteckteils 258 und der andere in Form eines dazu komplementären Aufnahmeteils 260 endet. Bei der dargestellten Ausführungsform wird das Einsteckteil von einem Zapfen 258 gebildet, der im wesentlichen parallel zur Längsrichtung der länglichen Platten 114 a, 114 b ist, und das Aufnahmeteil 260 besteht aus einem Schlitz, der in gleicher Weise zu dieser Längsrichtung parallel ist. Dank dieser Anordnung nimmt die Montageeinheit der Lenkstange 20 besonders gut um die horizontale Längsachse xx des Fahrrades wirkende Momente auf, die erzeugt werden können, wenn der Fahrer unterschiedliche und / oder sogar entgegengesetzte Kräfte auf die beiden Enden der Lenkstange in im wesentlichen vertikaler Richtung ausübt.

Ein wesentlicher Vorteil dieser verschiedenen Ausführungsformen besteht darin, daß es möglich ist, verschiedene Ausgestaltungen von Aufsätzen herzustellen, die den verschiedenen, geschilderten Einstellmöglichkeiten angepaßt sind. Diese verschiedenen Ausführungen von Aufsätzen können dann entsprechend der vorgesehenen Verwendungsart des Fahrrads kurz vor der endgültigen Fertigstellung des Rades ausgewählt und auf dem Gabelkopf befestigt werden, so daß sich mit einfachen Mitteln eine hohe Variabilität ergibt.

## Patentansprüche

1. Fahrrad-Vorderradgabel (10) aus einem Verbundwerkstoff, bestehend aus zwei Gabelarmen (12, 14), die sich zur Bildung eines stabförmigen Gabelkopfes (18) miteinander vereinigen, wobei der Gabelkopf (18) zwei nach hinten gerichtete Vorsprünge, nämlich einen oberen Vorsprung (30) und einen unteren Vorsprung (28), aufweist, wobei beide Vorsprünge (28, 30) Gelenkteile (36, 38) tragen, die mit ergänzenden Gelenkteilen (32, 34) des Lenkkopfes (24) des Rahmens zur Bildung der Schwenkachse (Y Y) der Vordergabel zusammenwirken
dadurch **gekennzeichnet,**
daß die Gabelarme (12, 14) im wesentlichen geradlinig ausgebildet und ihre Mittellinien zumindest im wesentlichen in einer Ebene gelegen sind, in der auch die Mittellinie des Gabelkopfes (18) verläuft, wobei diese Ebene in einem von den Abmessungen des Fahrrades abhängigen Abstand vor der Schwenkachse (YY) angeordnet ist, der geeignet ist, die Stabilität des Fahrrades zu gewährleisten, und daß der obere, nach hinten gerichtete Vorsprung (30) des Gabelkopfes (18) an einem vom Gabelkopf (18) getrennten Aufsatz (64, 90, 242) vorgesehen ist, der am oberen Ende des Gabelkopfes (18) angebracht ist.

2. Vorderradgabel nach Anspruch 1,
dadurch **gekennzeichnet,**
daß der Gabelkopf (18) einen Querschnitt (40, 42) mit aerodynamischem Umriß aufweist, dessen Breite in der Größenordnung der Breite des Lenkkopfes (24) des Rahmens (22) des Fahrrads ist, wobei vorzugsweise die Querschnitte (14, 44) des Gabelkopfes (18) und des Lenkkopfes (24) des Rahmens zusammen zumindest im wesentlichen eine tropfenförmige Umrißform besitzen.

3. Vorderradgabel nach Anspruch 1 oder 2,
dadurch **gekennzeichnet,**
daß zwischen dem Gabelkopf (18) und dem Lenkkopf (24) des Rahmens ein Zwischenstück (202) in Form eines Bandes angeordnet ist, das den kontinuierlichen Verlauf des Außenumrisses sicherstellt, und daß das Zwischenstück (202) aus elastomerem Material besteht und seitliche Wülste (206, 208) aufweist, die beim Drehen des Gabelkopfes (18) in bezug auf den Lenkkopf (24) des Rahmens seitliche Dämpfungsanschläge bilden.

4. Vorderradgabel nach einem der vorhergehenden Ansprüche,
dadurch **gekennzeichnet,**
daß sie in Verbindung mit einem rohrförmigen Lenkkopf (24) des Rahmens verwendbar ist, der einen zur Schwenkachse (YY) koaxialen zylindrischen Durchgang (56) aufweist, daß die Gelenkteile (58, 60) des Lenkkopfs (24) in diesem Durchgang (56) angeordnet sind und daß die Gelenkteile (32, 34, 36, 38; 220, 222, 224, 226) des Gabelkopfes (18) eine Achse (50) bilden, die durch den Durchgang (56) hindurch verläuft.

5. Vorderradgabel nach einem der vorhergehenden Ansprüche,
dadurch **gekennzeichnet,**
daß sie in Verbindung mit einem massiven Lenkkopf (24) des Rahmens verwendbar ist, der Aufnahmevorrichtungen für die Gelenkteile (74, 76) des Lenkkopfes (24) aufweist, in welche die Gelenkteile (78, 86) des Gabelkopfes (18) eingreifen, und daß das von dem unteren Vorsprung getragene Gelenkteil (36) einen Einsatz (52) umfaßt.

6. Vorderradgabel nach einem der vorhergehenden Ansprüche,
dadurch **gekennzeichnet,**
daß die Gelenkteile (36, 38; 224, 226) des Gabelkopfes (18) und die Gelenkteile (32, 34; 220, 222) des Rahmens (24) über Wälznadeln zusammenwirken, und daß vorzugsweise eines der Gelenkteile (32, 34, 36, 38; 220, 222, 224, 226) des Gabelkopfes (18) oder des Rahmens (24) Organe (230, 233) zum Ausgleichen des axialen Spiels aufweist.

7. Vorderradgabel nach einem der Ansprüche 1 bis 6,
dadurch **gekennzeichnet,**
daß der von dem oberen nach hinten gerichteten Vorsprung (30) getragene Gelenkteil (38; 84, 86) an dem Aufsatz (64, 90, 242) demontierbar befestigt ist.

8. Vorderradgabel nach einem der Ansprüche 1 bis 7,
dadurch **gekennzeichnet,**
daß der Gabelkopf (18) mit einer vorgebbaren Maximallänge gefertigt und so ausgebildet ist, daß er auf eine gewünschte Länge (91) abschneidbar ist, und daß der Aufsatz (90) zur Befestigung auf dem Gabelkopf (18) nach dem Abschneiden auf die gewünschte Länge bestimmmt ist, und daß vorzugsweise der Gabelkopf (18) und der Aufsatz (64) gegenseitig ausgerichtete Bohrungen (72) aufweisen, in die eine Büchse (68) eingesetzt ist, die zur gleichzeitigen Aufnahme eines Lenkstangenrohres (7) und zur festen Verbindung von Aufsatz (64) und Gabelkopf (18) dient.

9. Vorderradgabel nach einem der vorhergehenden Ansprüche,
**gekennzeichnet** durch
Organe zur Befestigung der Lenkstange (20) am Ende des Gabelkopfes (18), wobei die Montageorgane der Lenkstange (20) zwei Bewegungsarten ermöglichende Einstelleinrichtungen aufweisen, wobei wenigstens eine Bewegungsart eine Drehbewegung ist, und daß insbesondere eine Reihe von Aufsätzen (90, 90 a, 90 b, 90 c) vorgesehen ist, die jeweils einer unterschiedlichen Lenker-Einstellart zugeordnet und entsprechend auswählbar sind, wobei vorzugsweise beide Bewegungsarten Drehbewegungen sind.

10. Vorderradgabel nach Anspruch 9,
dadurch **gekennzeichnet,**
daß der Aufsatz (90) mit zwei Klemmflächen (100, 102) versehen ist, die einer ersten Einstellachse zugeordnet sind, daß die Lenkstange (20) ebenfalls mit zwei Klemmflächen (110, 112) versehen ist, die einer zweiten Einstellachse zugeordnet sind, und daß zwei längliche Platten (114 a, 114 b) mit zusammenwirkenden Klemmflächen (120 a, 122 a, 120 b, 122 b) und diesen Platten zugeordnete Einspannorgane (124, 126; 136) vorgesehen sind, wobei die Klemmflächen vorzugsweise eben und zwischen diesen Klemmflächen Keramikscheiben (250) eingeklemmt sind und insbesondere die länglichen Platten (114 a, 114 b) miteinander durch eine formschlüssige Verbindung (254, 256, 258, 260) zusammenwirken.

## Claims

1. Front fork (10) for cycles, made of composite material, comprising two fork arms (12, 14) which unite to form a bar-like fork head (18), the fork head (18) having two rearwardly directed projections, namely an upper projection (30) and a lower projection (28), both projections (28, 30) carrying pivot parts (36, 38) which cooperate with complementary pivot parts (32, 34) of the steering head (24) of the frame to form the pivot axis (YY) of the front fork
**characterized in that**
the fork arms (12, 14) are substantially straight and their centrelines are arranged at least generally in a plane in which the centreline of the fork head (18) also extends with this plane being located forwardly of the steering axis (YY) at a distance which depends on the dimensions of the cycle and is suitable to ensure the stability of the cycle and in that the rearwardly directed upper projection (30) of the fork head (18) is provided on a cap (64, 90, 242) which is separate from the fork (10) and mounted at the upper end of the fork head (18).

2. Front cycle fork according to claim 1,
**characterized in that**
the fork head (18) has a cross section (40, 42) with an aerodynamic outline, the width of which is of the order of magnitude of the width of the steering head (24) of the cycle frame (22), with the cross sections (14, 44) of the fork head (18) and of the steering head (24) of the frame jointly preferably having an outline of at least substantially droplet shape.

3. Front cycle fork according to claim 1 or claim 2,
**characterized in that**
it comprises an intermediate member (202) in the form of a band placed between the fork head (18) and the steering head (24) of the frame and ensuring the continuity of the outline, and in that said intermediate member is made of an elastomeric material and is provided with side beads (206, 208) which form lateral damping abutments on rotation of the fork head (18) relative to the steering head (24) of the frame.

4. Front cycle fork according to one of the preceding claims,
**characterized in that**
it can be used in connection with a tubular steering head (24) of the frame having a cyclindrical passage (56) coaxial to the pivot axis (YY); in that the pivot portions (58; 60) of the steering head (24) are mounted in this passage (56); and in that the pivot parts (32, 34, 36, 38; 220, 222, 224, 226) of the fork head (18) form an axle (50) which passes through said passage (56).

5. Front cycle fork according to one of the preceding claims,
**characterized in that**
it can be used in connection with a solid steering head (24) of the frame provided with a mounting means for the pivot parts (74, 76) of the stearing head (24) into which the pivot parts (78, 86) of the fork head (18) engange, and in that the pivot part (36) carried by the lower projection (28) comprises an insert (52).

6. Front cycle fork according to one of the preceding claims,
**characterized in that**
the pivot parts (36, 38; 224, 226) of the fork head (18) and the pivot parts (32, 34; 220, 222) of the frame (24) cooperate by means of needle rollers (58, 60), and in that one of the pivot parts (32, 34, 36, 38; 220, 222, 224, 226) of the fork head (18) or of the frame (24) preferably carried means (230, 232) for the compensation of the axial play.

7. Front cycle fork according to any one of the claims 1 to 6,
**characterized in that**
the pivot parts (38; 84, 86) carried by the upper rearwardly directed projection (30) is removably secured to the cap (64, 90, 242).

8. Front cycle fork according to one of the claims 1 to 7,
**characterized in that**
the fork head (18) is made with a predeterminable maximum length and is so realised that it can be cut to a desired length (91); and in that the cap (90) is intended to be secured to said fork head (18) after cutting the latter to the desired length, and in that the fork head (18) and the cap (64) are preferably provided with mutually aligned bores (72) into which is fitted a sleeve (68) intended both for receiving a handlebar stem (70) and for the firm connection of the cap (64) and the fork head (18).

9. Front cycle fork, according to one of the preceding claims,
**characterized by**
members for mounting the handlebar (20) at the end of the fork head (18), said handlebar mounting members comprising adjustment means allowing two modes of movement, at least one of the modes of movement being a rotational movement, and in that, in particular, provision is made of a series of caps (90, 90a, 90b, 90c), each of which is associated with a different adjustment mode of the handlebar, and which can correspondingly be selected, with both modes of movement preferably being rotational movements.

10. Front cycle fork according to claim 9,
**characterized in that**
the cap (90) is provided with two clamping surfaces (100, 102) which are associated with a first adjustment axis; in that the handlebar (20) is also provided with two clamping surfaces (110, 112) which are associated with a second adjustment axis; and in that two elongated plates (114a, 114b) having cooperating clamping surfaces (120a, 122a, 120b, 122b) and clamping members (124, 126; 136) associated with said plates are provided with the clamping surfaces being preferably planar and with ceramic washers (250) being clamped between these clamping surfaces, and with the elongated plates (114a, 114b) in particular cooperating with one another by means of a form-locked connection (254, 256, 258, 260).

## Revendications

1. Fourche (10) de roue avant de bicyclette en un matériau composite, se composant de deux bras (12, 14) de fourche qui se rejoignent pour la formation d'une tête (18) de fourche en forme de barre, la tête (18) de la fourche comprenant deux protubérances orientées vers l'arrière, à savoir une protubérance supérieure (30) et une protubérance inférieure (28), les deux protubérances (28, 30) comportant des éléments d'articulation (36, 38) qui coopèrent avec des pièces complémentaires d'articulation (32, 34) de la tête de conduite (24) du cadre pour la formation de l'axe de pivotement (YY) de la fourche avant, caractérisée en ce que les bras (12, 14) de la fourche sont sensiblement rectilignes et leurs lignes de symétrie sont placées au moins sensiblement dans un plan par lequel passe aussi la ligne de symétrie de la tête (18) de la fourche, ce plan étant disposé à une distance au-devant de l'axe de pivotement (YY) qui est fonction des dimensions de la bicyclette et qui convient à garantir la stabilité de la bicyclette et en ce que la protubérance supérieure (30) de la tête (18) de ta fourche qui est orientée vers l'arrière est prévue sur une pièce rapportée (64, 90, 242) qui est indépendante de la tête (18) de la fourche et qui est placée à l'extrémité supérieure de la tête (18) de la fourche.

2. Fourche de roue avant selon la revendication 1, caractérisée en ce que la tête (18) de la fourche a une section (40, 42) à profit aérodynamique dont la largeur est de l'ordre de grandeur de la largeur de la tête de conduite (24) du cadre (22) de la bicyclette, les sections (14, 44) de la tête (18) de ta fourche et de la tête de conduite (24) du cadre ayant de préférence ensemble au moins sensiblement une forme de profil en forme de goutte.

3. Fourche de roue avant selon la revendication 1 ou 2, caractérisée en ce qu'une pièce intermédiaire (202) en forme d'une bande, qui est disposée entre la tête (18) de la fourche et la tête de conduite (24) du cadre, assure la continuité du profil extérieur et en ce que la pièce intermédiaire (202) est en matériau élastomère et comporte des bourrelets latéraux (206, 208) qui forment des butées latérales d'amortissement lors de la rotation de la tête (18) de la fourche par rapport à la tête de conduite (24) du cadre.

4. Fourche de roue avant selon l'une des revendications précédentes, caractérisée en ce qu'elle est utilisable conjointement avec une tête de conduite tubulaire (24) du cadre qui comporte un passage cylindrique (56) coaxial à l'axe de pivotement (YY), en ce que les éléments d'articulation (58, 60) de la tête de conduite (24) sont disposés dans ce passage (56) et en ce que les éléments d'articulation (32, 34, 36, 38 ; 220, 222, 224, 226) de la tête (18) de la fourche forment un axe (50) qui passe par le passage (56).

5. Fourche de roue avant selon l'une des revendications précédentes, caractérisée en ce qu'elle est utilisable conjointement avec une tête massive de conduite (24) du cadre qui comprend des dispositifs de logement des éléments d'articulation (74, 76) de la tête de conduite (24) dans lesquels pénètrent les éléments d'articulation (78, 86) de la tête (18) de la fourche et en ce que l'élément d'articulation (36) porté par la protubérance inférieure comprend une pièce rapportée intérieure (52).

6. Fourche de roue avant selon l'une des revendications précédentes, caractérisée en ce que les éléments d'articulation (36, 38 ; 224, 226) de la tête (18) de la fourche et les éléments d'articulation (32, 34 ; 220, 222) du cadre (24) coopèrent au moyen de roulements à aiguilles et en ce que de préférence l'un des éléments d'articulation (32, 34, 36, 38 ; 220, 222, 224, 226) de la tête (18) de la fourche ou du cadre (24) comprend des organes (230, 233) de compensation du jeu axial.

7. Fourche de roue avant selon l'une des revendications 1 à 6, caractérisée en ce que l'élément d'articulation (38 ; 84, 86) porté par la protubérance supérieure (30) qui est orientée vers l'arrière est fixé démontable à la pièce rapportée (64, 90, 242).

8. Fourche de roue avant selon l'une des revendications 1 à 7, caractérisée en ce que la tête (18) de la fourche est fabriquée à une longueur maximale pouvant être prescrite et conformée de manière qu'elle puisse être sectionnée à une longueur souhaitée (91) et en ce que la pièce rapportée (90) est destinée à être fixée à la tête (18) de la fourche après sectionnement à la longueur souhaitée et en ce que la tête (18) de la fourche et la pièce rapportée (64) comportent de préférence des trous (72) alignés l'un sur l'autre et dans lesquels est logé un manchon (68) qui est destiné à la fois à loger un tube (7) d'un guidon et à solidariser la pièce rapportée (64) et la tête (18) de la fourche.

9. Fourche de roue avant selon l'une des revendications précédentes, caractérisée par des organes de fixation du guidon (20) à l'extrémité de la tête (18) de la fourche, les organes de montage du guidon (20) comprenant des dispositifs de réglage autorisant deux genres de mouvement, au moins un genre de mouvement étant un mouvement de rotation et en ce qu'en particulier une série de pièces rapportées (90, 90a, 90b, 90c) qui sont prévues sont chacune associées à un genre différent de réglage du guidon et peuvent être sélectionnées en conséquence, les deux genres de mouvement étant de préférence des mouvements de rotation.

10. Fourche de roue avant selon la revendication 9, caractérisée en ce que la pièce rapportée (90) comporte deux surfaces de serrage (100, 102) qui sont associées à un premier axe de réglage, en ce que le guidon (20) comporte également deux surfaces de serrage (110, 112) qui sont associées à un second axe de réglage et en ce que deux plaques allongées (114a, 114b) ayant des surfaces complémentaires de serrage (120a, 122a, 120b, 122b) ainsi que des organes de fixation (124, 126 ; 136) associés à ces plaques sont prévus, les surfaces de serrage étant de préférence planes et des rondelles de céramique (250) étant enserrées entre ces surfaces de serrage et en particulier les plaques allongées (114a, 114b) coopérant l'une avec l'autre par un assemblage à complémentarité de formes (254, 256, 258, 260).
